# EUROPÄISCHE PATENTANMELDUNG

(11) **EP 3 705 210 A1**
(43) Veröffentlichungstag der Anmeldung: **09.09.2020**
(21) Anmeldenummer: 19160681.3
(22) Anmeldetag: 05.03.2019
(51) Int. Cl.: B22F 3/105, B22F 7/06, B33Y 10/00, B33Y 30/00, B29C 64/153

(54) **VERFAHREN UND ANLAGE ZUM VERSEHEN EINES BEREITS HERGESTELLTEN ERSTEN BAUTEILS MIT WENIGSTENS EINEM ADDITIV GEFERTIGTEN ZWEITEN BAUTEIL**

(71) Anmelder: Siemens Aktiengesellschaft, 80333 München (DE)
(72) Erfinder: Fenske, Sören, 10625 Berlin (DE); Schäfer, Martin, 10557 Berlin (DE)

(57) **Zusammenfassung**

Die Erfindung betrifft ein Verfahren zum Versehen eines bereits hergestellten ersten Bauteils (20) mit einem additiv gefertigten zweiten Bauteil (22). Dabei wird ein pulverförmiges Ausgangsmaterial (26) in einen Aufnahmebereich (14), in welchem das bereits hergestellte erste Bauteil (20) zumindest teilweise bereits angeordnet ist, mittels eines Förderelements (16) eingebracht, wodurch in dem Aufnahmebereich (14) ein Pulverbett (28) aus dem Ausgangsmaterial (26) gebildet wird. Zumindest ein Teil (T) des Pulverbetts (28) wird mit einem Energiestrahl (32) beaufschlagt, wodurch der Teil (T) erwärmt wird und aus dem Teil (T) eine Schicht zum schichtweisen Herstellen des zweiten Bauteils (22) hergestellt und mit dem ersten Bauteil (20) verbunden werden. Zum Einbringen des pulverförmigen Ausgangsmaterials (26) in den Aufnahmebereich (14) wird das Förderelement (16) in wenigstens eine erste Richtung (40) und in eine von der ersten Richtung (40) unterschiedliche zweite Richtung (42) relativ zu dem ersten Bauteil (20) bewegt.

## Beschreibung

Die Erfindung betrifft Verfahren und eine Anlage zum Versehen eines bereits hergestellten ersten Bauteils mit wenigstens einem additiv gefertigten zweiten Bauteil.

Die DE 10 2014 224 410 A1 offenbart ein Verfahren zur Reparatur eines Bauteils mit einem geschädigten Substrat mit einer gerichteten erstarrten Struktur. Bei dem Verfahren wird ein Bereich mit einem Defekt von dem Substrat entfernt, sodass eine defektfreie, lokale Oberfläche auf dem Substrat entsteht. Des Weiteren ist der EP 2 567 785 A1 ein Verfahren zum Bearbeiten eines Werkstücks als bekannt zu entnehmen.

Aufgabe der vorliegenden Erfindung ist es, Verfahren und eine Anlage bereitzustellen, sodass ein bereits hergestelltes erstes Bauteil auf besonders vorteilhafte Weise mit einem additiv gefertigten zweiten Bauteil versehen werden kann.

Diese Aufgabe wird erfindungsgemäß durch ein Verfahren mit den Merkmalen des Patentanspruchs 1, durch ein Verfahren mit den Merkmalen des Patentanspruchs 9, durch ein Verfahren mit den Merkmalen des Patentanspruchs 10 sowie durch eine Anlage mit den Merkmalen des Patentanspruchs 11 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Versehen eines bereits hergestellten ersten Bauteils mit wenigstens einem additiv gefertigten zweiten Bauteil. Dies bedeutet, dass bei dem Verfahren das erste Bauteil nach dessen Herstellung und somit in bereits hergestelltem Zustand des ersten Bauteils, das heißt nachdem das erste Bauteil hergestellt wurde, mit dem zweiten Bauteil versehen, das heißt insbesondere verbunden wird. Mit anderen Worten ist unter dem Merkmal, dass das erste Bauteil mit dem zweiten Bauteil versehen wird, insbesondere zu verstehen, dass das zweite Bauteil mit dem ersten Bauteil verbunden beziehungsweise an dem ersten Bauteil befestigt wird. Hierdurch bilden die miteinander verbundenen Bauteile eine Baueinheit. Unter dem Merkmal, dass das zweite Bauteil additiv gefertigt ist beziehungsweise wird, ist insbesondere zu verstehen, dass das zweite Bauteil durch ein additives Fertigungsverfahren, das heißt durch additive Fertigung, hergestellt ist beziehungsweise im Rahmen des Verfahrens hergestellt wird. Das additive Fertigungsverfahren wird auch als generatives Fertigungsverfahren bezeichnet. Insbesondere ist es im Rahmen des Verfahrens vorgesehen, dass das zweite Bauteil additiv gefertigt, das heißt durch additive Fertigung hergestellt und während seiner Herstellung mit dem ersten Bauteil verbunden wird, wodurch das erste Bauteil mit dem zweiten Bauteil versehen wird. Durch Versehen des ersten Bauteils mit dem zweiten Bauteil wird das erste Bauteil beispielsweise repariert.

In vollständig beziehungsweise fertig hergestelltem Zustand der zuvor genannten Baueinheit, welche in ihrem fertig beziehungsweise vollständig hergestellten Zustand das erste Bauteil und das zweite Bauteil umfasst, stellt beispielsweise das erste Bauteil eine erste Komponente und das zweite Bauteil eine zweite Komponente der Baueinheit dar. Das erste Bauteil ist beispielsweise auf herkömmliche Weise und somit durch ein von einem generativen Fertigungsverfahren unterschiedliches, herkömmliches Fertigungsverfahren hergestellt, sodass die erste Komponente eine herkömmlich hergestellte Komponente ist. Demgegenüber ist das zweite Bauteil beziehungsweise die zweite Komponente durch ein generatives Fertigungsverfahren und somit additiv hergestellt, sodass die zweite Komponente eine additiv gefertigte zweite Komponente der Baueinheit ist.

Bei einem ersten Schritt des Verfahrens gemäß dem ersten Aspekt der Erfindung wird ein pulverförmiges Ausgangsmaterial, welches auch als granulare Materie oder Pulver bezeichnet wird, in einen Aufnahmebereich, insbesondere in einen Aufnahmeraum, eingebracht, in welchem das bereits hergestellte erste Bauteil bereits angeordnet ist. Mit anderen Worten wird das Pulver in den Aufnahmebereich eingebracht, während das erste Bauteil bereits in dem Aufnahmebereich, insbesondere in dem Aufnahmeraum, zumindest teilweise angeordnet beziehungsweise aufgenommen ist. Der Aufnahmebereich, insbesondere der Aufnahmeraum, wird beispielsweise durch ein Behältnis, insbesondere ein Becken, begrenzt. Beispielsweise ist beziehungsweise wird das erste Bauteil mittels einer, insbesondere mechanischen, Fixiereinrichtung relativ zu dem Behältnis fixiert, während das pulverförmige Ausgangsmaterial in den Aufnahmebereich eingebracht, insbesondere eingefördert beziehungsweise hineingefördert, wird. Bei dem ersten Schritt des Verfahrens wird das pulverförmige Ausgangsmaterial mittels wenigstens eines Förderelements in den Aufnahmebereich eingebracht, insbesondere hineingefördert, wodurch in dem Aufnahmebereich, insbesondere in dem Aufnahmeraum, ein Pulverbett aus dem pulverförmigen Ausgangsmaterial gebildet wird. Insbesondere wird das Pulverbett, insbesondere in Umfangsrichtung, um das bereits in dem Aufnahmebereich angeordnete erste Bauteil herum gebildet, sodass das erste Bauteil zumindest teilweise von dem Pulver umgeben ist.

Das wenigstens eine Förderelement, welches auch als erstes Förderelement bezeichnet wird, sowie beispielsweise das Behältnis sind Bestandteile einer auch als Vorrichtung bezeichneten Anlage, welche zur additiven Fertigung von Bauelementen und somit insbesondere zur additiven Fertigung des zweiten Bauteils ausgebildet ist. Daher wird die Anlage auch als additive Fertigungsanlage oder additive Fertigungsvorrichtung bezeichnet.

Bei einem sich vorzugsweise zeitlich an den ersten Schritt anschließenden zweiten Schritt des Verfahrens wird zumindest ein Teil des Pulverbetts mit wenigstens einem beispielsweise als Laserstrahl ausgebildeten Energiestrahl bestrahlt. Mit anderen Worten wird zumindest ein Teil des in dem Aufnahmebereich angeordneten und das Pulverbett bildenden Ausgangsmaterials mit dem Energiestrahl bestrahlt. Hierunter ist zu verstehen, dass der beispielsweise als Laserstrahl ausgebildete Energiestrahl zumindest auf den Teil des Pulverbetts trifft, insbesondere während der Energiestrahl relativ zu dem Pulverbett und relativ zu dem ersten Bauteil bewegt wird. Der Energiestrahl wird beispielsweise von einer Strahlenquelle der Anlage bereitgestellt, wobei die Strahlenquelle beispielsweise ein Laser ist. Die Strahlenquelle und somit der Energiestrahl werden beispielsweise mittels einer Antriebseinrichtung der Anlage relativ zu dem Behältnis und relativ zu dem in dem Aufnahmebereich angeordneten und von dem pulverförmigen Ausgangsmaterial umgebenen ersten Bauteil bewegt, während der Energiestrahl auf das Pulver beziehungsweise auf den Teil auftrifft.

Durch Bestrahlen zumindest des Teils des Pulverbetts wird der Teil mittels des Energiestrahls erwärmt. Hierdurch wird aus dem Teil wenigstens eine Schicht zum schichtweisen Herstellen des zweiten Bauteils hergestellt und mit dem ersten Bauteil zumindest mittelbar, insbesondere direkt, verbunden. Durch das Erwärmen des Teils beziehungsweise des Pulvers wird zumindest der Teil beispielsweise geschmolzen, das heißt an- und/oder aufgeschmolzen, wodurch die Schicht hergestellt wird. Somit kann es sich bei dem generativen Fertigungsverfahren, mittels welchem das zweite Bauteil schichtweise und somit Schicht für Schicht hergestellt wird, um selektives Laserschmelzen (SLM) oder aber um ein anderes generatives Fertigungsverfahren handeln. Das pulverförmige Ausgangsmaterial umfasst mehrere Partikel, welche vor dem Bestrahlen mit dem Energiestrahl voneinander los und somit noch nicht miteinander verbunden sind. Durch das Erwärmen zumindest des Teils des pulverförmigen Ausgangsmaterials werden den Teil bildende Partikel des Ausgangsmaterials erwärmt und dadurch miteinander verbunden. Beispielsweise werden die Partikel dadurch, dass sie mit dem Energiestrahl bestrahlt und somit beaufschlagt werden, geschmolzen, das heißt an- und/oder aufgeschmolzen, und dadurch miteinander verbunden, sodass aus den mit dem Energiestrahl bestrahlten Partikeln die Schicht hergestellt wird. Ferner ist es denkbar, dass die Schicht gesintert, das heißt durch Sintern hergestellt wird. Hierbei werden beispielsweise die Partikel, welche mit dem Energiestrahl bestrahlt werden, zusammengebacken und dadurch miteinander verbunden, wodurch die Schicht aus den mit dem Energiestrahl bestrahlten Partikeln hergestellt wird.

Beispielsweise werden der erste Schritt und der zweite Schritt mehrmals aufeinanderfolgend und abwechselnd durchgeführt, wodurch jeweilige Schichten hergestellt, aufeinander angeordnet und miteinander verbunden werden, wobei das zweite Bauteil aus diesen Schichten hergestellt beziehungsweise aufgebaut wird. Somit wird das Bauteil schichtweise, das heißt Schicht für Schicht, hergestellt. Beispielsweise wird diejenige der Schichten, welche zuerst hergestellt wird und auch als erste Schicht bezeichnet wird, direkt mit dem ersten Bauteil verbunden. Diejenige der Schichten, welche als zweites und somit nach dem Herstellen der ersten Schicht hergestellt, zumindest teilweise auf der ersten Schicht angeordnet und auch als zweite Schicht bezeichnet wird, wird beispielsweise, insbesondere direkt, mit der ersten Schicht und über die erste Schicht mit dem ersten Bauteil verbunden. Ferner ist es denkbar, dass die zweite Schicht zumindest teilweise direkt mit dem ersten Bauteil verbunden wird. Auf diese Weise werden die Schichten, aus welchen das zweite Bauteil hergestellt wird, nacheinander, das heißt sukzessive hergestellt und jeweils zumindest mittelbar und mit dem ersten Bauteil verbunden.

Um nun das erste Bauteil auf besonders vorteilhafte und einfache Weise mit dem zweiten Bauteil versehen zu können, ist es bei dem ersten Aspekt der Erfindung vorgesehen, dass zum Einbringen des pulverförmigen Ausgangsmaterials in den Aufnahmebereich, das heißt während des Einbringens des pulverförmigen Ausgangsmaterials in den Aufnahmebereich, das erste Förderelement, insbesondere mittels wenigstens eines Antriebs der Anlage, in wenigstens eine erste Richtung und, insbesondere danach, in wenigstens eine von der ersten Richtung unterschiedliche zweite Richtung relativ zu dem ersten Bauteil sowie beispielsweise relativ zu dem Behältnis und/oder relativ zu dem Laser, bewegt wird. Beispielsweise verläuft die zweite Richtung schräg oder senkrecht oder aber windschief zu der ersten Richtung.

Bei dem ersten Förderelement handelt es sich beispielsweise um eine Rolle oder aber um einen Rakel beziehungsweise um einen Schieber, wobei beispielsweise mittels des ersten Förderelements das pulverförmige Ausgangsmaterial aus einem Reservoir in den Aufnahmebereich und somit in das Behältnis gefördert wird. Während dieses Förderns wird das erste Förderelement in die erste Richtung und in die von der ersten Richtung unterschiedliche zweite Richtung bewegt. Mit anderen Worten, während das erste Förderelement in die erste Richtung und in die von der ersten Richtung unterschiedliche zweite Richtung relativ zu dem ersten Bauteil bewegt wird, wird mittels des ersten Förderelements das pulverförmige Ausgangsmaterial, aus welchem das zweite Bauteil additiv beziehungsweise generativ hergestellt wird, in den Aufnahmebereich eingebracht, insbesondere in den Aufnahmebereich hineingefördert. Durch diese Bewegung des ersten Förderelements können Kollisionen des ersten Förderelements mit dem ersten Bauteil vermieden werden, und das Ausgangsmaterial kann besonders präzise, bedarfsgerecht und vorzugsweise gleichmäßig in den Aufnahmebereich eingebracht und dabei beispielsweise um das erste Bauteil herum verteilt werden. In der Folge kann das zweite Bauteil besonders präzise sowie mit einer besonders hohen Qualität generativ hergestellt werden.

Als besonders vorteilhaft hat es sich gezeigt, wenn das Förderelement, insbesondere während des Einbringens des pulverförmigen Ausgangsmaterials in den Aufnahmebereich, zumindest translatorisch in die erste Richtung und/oder in die zweite Richtung relativ zu dem ersten Bauteil bewegt wird. Hierdurch kann das Ausgangsmaterial bedarfsgerecht und besonders präzise in den Aufnahmebereich eingebracht, insbesondere hineingefördert, werden.

Um das zweite Bauteil besonders präzise und somit mit einer besonders hohen Qualität herstellen zu können, ist es in weiterer Ausgestaltung der Erfindung vorgesehen, dass das Förderelement während des Einbringens des Ausgangsmaterials in den Aufnahmebereich zunächst in die erste Richtung zumindest translatorisch relativ zu dem ersten Bauteil bewegt, daraufhin um eine senkrecht zu der ersten Richtung und senkrecht zu der zweiten Richtung verlaufende Schwenkachse, insbesondere mittels des Antriebs, relativ zu dem ersten Bauteil verschwenkt und daraufhin in die schräg oder senkrecht zur ersten Richtung verlaufende zweite Richtung zumindest translatorisch relativ zu dem ersten Bauteil bewegt wird.

Das durch das in den Aufnahmebereich eingebrachte Ausgangsmaterial gebildete Pulverbett, insbesondere dessen Oberfläche, welche zumindest teilweise mit dem Energiestrahl beaufschlagt wird, erstreckt sich beispielsweise in einer Ebene, welche, insbesondere während des Verfahrens, zumindest im Wesentlichen horizontal verlaufen kann. Dabei ist es denkbar, dass das erste Bauteil insbesondere dann, wenn es eine komplexe Geometrie, insbesondere Außengeometrie, aufweist, in einem Zustand, in welchem das erste Bauteil in dem Aufnahmebereich angeordnet und beispielsweise zumindest teilweise von dem Pulverbett umgeben ist, die genannte Ebene überragt beziehungsweise die Ebene durchdringt und somit beispielsweise von der Ebene und somit von dem Pulverbett beziehungsweise der genannten Oberfläche des Pulverbetts absteht. Mit anderen Worten kann zumindest ein Bereich des ersten Bauteils von der Ebene und somit von der Oberfläche abstehen, das heißt die Ebene beziehungsweise die Oberfläche überragen. Falls keine entsprechenden Gegenmaßnahmen getroffen sind, kann es hierdurch zu Kollisionen zwischen dem ersten Bauteil beziehungsweise zwischen dem Bereich des ersten Bauteils und dem ersten Förderelement kommen, da das erste Förderelement entlang der Ebene beziehungsweise zumindest teilweise in der Ebene bewegt wird, um das Pulverbett beziehungsweise dessen Oberfläche in der Ebene auszubilden. Da es nun jedoch erfindungsgemäß vorgesehen ist, dass das erste Förderelement während des Einbringens des Ausgangsmaterials in den Aufnahmebereich in die wenigstens zwei voneinander unterschiedlichen Richtungen relativ zu dem ersten Bauteil bewegt wird, kann das erste Förderelement derart relativ zu dem ersten Bauteil bewegt werden, dass das erste Förderelement nicht mit dem ersten Bauteil beziehungsweise nicht mit dem Teil des ersten Bauteils kollidiert. Insbesondere kann das erste Förderelement um den genannten Bereich des ersten Bauteils herumbewegt werden, um einerseits Kollisionen zwischen dem ersten Förderelement und dem ersten Bauteil zu vermeiden und andererseits um das Ausgangsmaterial besonders vorteilhaft und gleichmäßig um das erste Bauteil herum zu verteilen.

Dabei hat es sich als besonders vorteilhaft gezeigt, wenn die erste Richtung und die zweite Richtung in der Ebene oder parallel zu der Ebene verlaufen.

Bei einer besonders vorteilhaften Ausführungsform der Erfindung wird zumindest ein Teilbereich des in dem Aufnahmebereich angeordneten ersten Bauteils mittels einer, insbesondere elektrischen oder elektronischen, Erfassungseinrichtung, insbesondere der Anlage, erfasst. Dabei wird das Förderelement, insbesondere mittels des Antriebs und/oder automatisch, in Abhängigkeit von dem Erfassen des Teilbereichs bewegt. Bei dem Teilbereich handelt es sich beispielsweise um den zuvor genannten Bereich, welcher die Ebene beziehungsweise die Oberfläche des Pulverbetts überragt. Da es nun vorzugsweise vorgesehen ist, dass der Teilbereich des ersten Bauteils, insbesondere optisch, erfasst wird, und da das erste Förderelement in Abhängigkeit von dem Erfassten des Teilbereichs bewegt wird, können Kollisionen des ersten Förderelements mit dem Teilbereich des ersten Bauteils sicher vermieden werden. Ferner kann das erste Förderelement besonders nahe an den Teilbereich heranbewegt werden, während mittels des Förderelements das Ausgangsmaterial in den Aufnahmebereich eingebracht wird, wodurch das Ausgangsmaterial besonders präzise um das erste Bauteil herum verteilt werden kann.

Die Erfassungseinrichtung stellt beispielsweise wenigstens ein, insbesondere elektrisches, Signal bereit, welches den mittels der Erfassungseinrichtung, insbesondere optisch, erfassten Teilbereich des ersten Bauteils charakterisiert. Die Anlage, welche beispielsweise die Erfassungseinrichtung, das Behältnis, das Förderelement, den Antrieb, die Antriebseinrichtung und die Strahlenquelle umfasst, umfasst ferner beispielsweise eine auch als Steuerung oder Regelung bezeichnete elektronische Recheneinrichtung. Die elektronische Recheneinrichtung empfängt beispielsweise das von der Erfassungseinrichtung bereitgestellte erste Signal. Beispielsweise stellt die elektronische Recheneinrichtung in Abhängigkeit von dem empfangenen ersten Signal ein, insbesondere elektrisches, zweites Signal bereit, welches auch als Ansteuersignal bezeichnet wird. Das Ansteuersignal wird beispielsweise an den Antrieb übermittelt beziehungsweise von dem Antrieb empfangen. Hierdurch wird der Antrieb mittels der elektronischen Recheneinrichtung angesteuert und dadurch betrieben, insbesondere gesteuert oder geregelt. Mittels des Antriebs wird das erste Förderelement in Abhängigkeit von dem Ansteuersignal und somit in Abhängigkeit von dem ersten Signal und somit in Abhängigkeit von dem Erfassen des Teilbereichs bewegt. Mit anderen Worten wird der Antrieb in Abhängigkeit von dem ersten Signal beziehungsweise in Abhängigkeit von dem Erfassen des Teilbereichs betrieben, um das erste Förderelement mittels des Antriebs in Abhängigkeit von dem Erfassen des Teilbereichs zu bewegen, insbesondere derart, dass das erste Förderelement um den Teilbereich herumbewegt wird beziehungsweise dass Kollisionen zwischen dem Förderelement und dem Teilbereich unterbleiben. Insbesondere kann vorgesehen sein, dass der Teilbereich mittels der Anlage automatisch erfasst wird, wobei das Förderelement mittels des Antriebs in Abhängigkeit von dem Erfassen des Teilbereichs automatisch bewegt wird. Dadurch können Kollisionen zwischen dem Förderelement und dem Teilbereich des ersten Bauteils sicher vermieden werden, und das zweite Bauteil kann besonders präzise hergestellt werden.

Eine weitere Ausführungsform zeichnet sich dadurch aus, dass das pulverförmige Ausgangsmaterial auch mittels wenigstens eines zusätzlichen zweiten Förderelements in den Aufnahmebereich, insbesondere aus dem Reservoir, eingebracht wird. Unter dem Merkmal, dass das zweite Förderelement ein zusätzliches Förderelement ist, kann insbesondere verstanden werden, dass das zweite Förderelement zusätzlich zu dem ersten Förderelement vorgesehen ist. Somit sind die Förderelemente separat voneinander ausgebildete Komponenten, insbesondere der Anlage. Um das pulverförmige Ausgangsmaterial, insbesondere aus dem Reservoir, mittels des zweiten Förderelements in den Aufnahmebereich einzubringen, wird das zweite Förderelement relativ zu dem ersten Förderelement und relativ zu dem ersten Bauteil, insbesondere zumindest translatorisch, bewegt.

Dabei hat es sich als besonders vorteilhaft gezeigt, wenn das zweite Förderelement in Abhängigkeit von dem Erfassen des Teilbereiches des ersten Bauteils bewegt wird. Somit können die vorigen und folgenden Ausführungen zum ersten Förderelement ohne weiteres auch auf das zweite Förderelement übertragen werden und umgekehrt. Beispielsweise wird das zweite Förderelement mittels des Antriebs der Anlage bewegt. Der Antrieb kann dabei wenigstens einen oder aber mehrere Stelleinrichtungen beziehungsweise Aktoren umfassen, wobei das jeweilige Förderelement mittels wenigstens eines der Aktoren bewegt werden kann.

Schließlich hat es sich als besonders vorteilhaft gezeigt, wenn das zweite Förderelement in zumindest eine der Richtungen, das heißt in die erste Richtung und/oder in die zweite Richtung, und/oder in eine von der ersten Richtung und von der zweiten Richtung unterschiedliche dritte Richtung relativ zu dem ersten Bauteil und relativ zu dem ersten Förderelement bewegt wird, während das pulverförmige Ausgangsmaterial mittels des zweiten Förderelements in den Aufnahmebereich eingebracht wird. Insbesondere kann unter dem Einbringen des Ausgangsmaterials in den Aufnahmebereich auch verstanden werden, dass das pulverförmige Ausgangsmaterial mittels des jeweiligen Förderelements in dem Aufnahmebereich verteilt wird.

Die dritte Richtung verläuft beispielsweise schräg oder senkrecht zur ersten Richtung und/oder schräg oder senkrecht zur zweiten Richtung. Insbesondere ist es denkbar, dass die dritte Richtung in der genannten Ebene oder parallel zu der genannten Ebene verläuft.

Das jeweilige Förderelement ist beispielsweise ein Rakel oder ein Schieber, sodass das jeweilige Förderelement beispielsweise eine Längserstreckungsrichtung aufweist. Ferner ist es denkbar, dass das jeweilige Förderelement beziehungsweise zumindest eines der Förderelemente in Richtung beziehungsweise entlang seiner Längserstreckungsrichtung relativ zu dem ersten Bauteil, insbesondere axial, verschiebbar ist beziehungsweise verschoben wird. Hierdurch können Kollisionen zwischen dem jeweiligen Förderelement und dem ersten Bauteil sicher vermieden werden.

Insbesondere kann unter dem Einbringen des pulverförmigen Ausgangsmaterials in den Aufnahmebereich verstanden werden, dass das Ausgangsmaterial dosiert, das heißt in den Aufnahmebereich eindosiert wird. Beispielsweise wird das Ausgangsmaterial mittels des jeweiligen Förderelements in den Aufnahmebereich hineingeschoben sowie innerhalb des Aufnahmebereichs geschoben beziehungsweise verschoben, um beispielsweise das Pulverbett und insbesondere dessen Oberfläche auszubilden. Ferner kann unter dem Einbringen des pulverförmigen Ausgangsmaterials in den Aufnahmebereich verstanden werden, dass das pulverförmige Ausgangsmaterial und somit das Pulverbett, insbesondere dessen Oberfläche, mittels des jeweiligen Förderelements geglättet werden. Insbesondere kann beispielsweise unter dem Einbringen des pulverförmigen Ausgangsmaterials in den Aufnahmebereich verstanden werden, dass das jeweilige Förderelement bewegt wird, um das pulverförmige Ausgangsmaterial zu bewegen und hierdurch beispielsweise in den Aufnahmebereich hineinzubewegen und/oder in dem Aufnahmebereich zu verteilen. Mit anderen Worten kann unter dem Einbringen des pulverförmigen Ausgangsmaterials in den Aufnahmebereich insbesondere verstanden werden, dass das pulverförmige Ausgangsmaterial mittels des jeweiligen Förderelements in den Aufnahmebereich hineinbewegt und/oder innerhalb des Aufnahmebereichs verteilt wird, während das jeweilige Förderelement relativ zu dem ersten Bauteil bewegt wird. Somit geht bei dem Einbringen des pulverförmigen Ausgangsmaterials in den Aufnahmebereich eine beziehungsweise die jeweilige Bewegung des jeweiligen Förderelements mit einer Bewegung beziehungsweise Förderung des pulverförmigen Ausgangsmaterials, insbesondere zeitgleich, einher. Somit wird beispielsweise das pulverförmige Ausgangsmaterial aus dem Reservoir in den Aufnahmebereich eingebracht und/oder aus einem ersten Teil des Aufnahmebereichs in einen zweiten Teil des Aufnahmebereichs hineinbewegt und somit verbracht. Dadurch kann beispielsweise das Pulver beziehungsweise dessen Oberfläche vorteilhaft geglättet werden.

Das erste Förderelement und das zweite Förderelement bilden beispielsweise einen sogenannten Doppelrakel oder Doppelschieber, wobei beispielsweise das zweite Förderelement rechtwinklig zur Längserstreckungsrichtung des ersten, auch als Hauptrakel bezeichneten Förderelements angeordnet ist und/oder bewegbar ist beziehungsweise bewegt wird. Das zweite Förderelement wird beispielsweise auch als Nebenrakel bezeichnet. Vor einem Hindernis wie beispielsweise dem Teilbereich des ersten Bauteils wäre es dann möglich, das Pulver mittels des Nebenrakels, insbesondere innerhalb des Aufnahmebereichs, zu verschieben und dies insbesondere entlang wenigstens einer Kante des ersten Bauteils, welche sich außerhalb der Oberfläche des Pulvers bildet beziehungsweise die Oberfläche überragt oder von der Oberfläche hervorsteht.

Grundsätzlich ist es denkbar, eine Dosiereinrichtung zu verwenden, welche das Pulver durch Rieseln oder dergleichen in den Aufnahmebereich einbringt und somit dem Aufnahmebereich zuführt. Im Vergleich zur Verwendung eines Förderelements kann hierdurch jedoch eine gewünschte, in den Aufnahmebereich einzubringende Dosierungsmenge des Pulvers weniger präzise eingestellt werden.

Ein zweiter Aspekt der Erfindung betrifft ein Verfahren zum Versehen eines bereits hergestellten ersten Bauteils mit wenigstens einem additiv gefertigten zweiten Bauteil. Bei einem ersten Schritt des Verfahrens gemäß dem zweiten Aspekt der Erfindung wird ein pulverförmiges Ausgangsmaterial in einen Aufnahmebereich eingebracht, in welchem das bereits hergestellte erste Bauteil bereits angeordnet ist, wodurch in dem Aufnahmebereich ein Pulverbett aus dem Ausgangsmaterial gebildet wird. Bei einem zweiten Schritt des Verfahrens gemäß dem zweiten Aspekt der Erfindung wird zumindest ein Teil des Pulverbetts mit wenigstens einem beispielsweise als Laserstrahl ausgebildeten Energiestrahl bestrahlt, wodurch zumindest der Teil erwärmt und aus dem Teil wenigstens eine Schicht zum schichtweisen Herstellen des zweiten Bauteils hergestellt und mit dem ersten Bauteil verbunden wird.

Um dabei das erste Bauteil auf besonders vorteilhafte Weise mit dem zweiten Bauteil zu verstehen, ist es bei dem zweiten Aspekt der Erfindung vorgesehen, dass zum Einbringen des pulverförmigen Ausgangsmaterials in den Aufnahmebereich beziehungsweise während des Einbringens des pulverförmigen Ausgangsmaterials in den Aufnahmebereich ein erstes Förderelement und wenigstens ein zusätzliches zweites Förderelement relativ zu dem ersten Bauteil und relativ zueinander bewegt werden. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ein dritter Aspekt der Erfindung betrifft ein Verfahren zum Versehen eines bereits hergestellten ersten Bauteils mit wenigstens einem additiv gefertigten zweiten Bauteil. Bei dem ersten Schritt des Verfahrens gemäß dem dritten Aspekt der Erfindung wird ein pulverförmiges Ausgangsmaterial in einen Aufnahmebereich eingebracht, in welchem das bereits hergestellte erste Bauteil bereits angeordnet ist. Dabei wird das pulverförmige Ausgangsmaterial mittels wenigstens eines Förderelements in den Aufnahmebereich eingebracht, wodurch in dem Aufnahmebereich ein Pulverbett aus dem Ausgangsmaterial gebildet wird. Bei dem zweiten Schritt des Verfahrens gemäß dem dritten Aspekt der Erfindung wird zumindest ein Teil des Pulverbetts mit wenigstens einem beispielsweise als Laserstrahl ausgebildeten Energiestrahl bestrahlt, wodurch der Teil erwärmt und aus dem Teil wenigstens eine Schicht zum schichtweisen Herstellen des Bauteils hergestellt und mit dem ersten Bauteil verbunden wird.

Um nun das erste Bauteil auf besonders vorteilhafte Weise mit dem zweiten Bauteil versehen zu können, ist es bei dem dritten Aspekt der Erfindung vorgesehen, dass zumindest ein Teilbereich des in dem Aufnahmebereich angeordneten ersten Bauteils mittels einer Erfassungseinrichtung erfasst wird, wobei zum Einbringen des pulverförmigen Ausgangsmaterials in den Aufnahmebereich beziehungsweise während des Einbringens des pulverförmigen Ausgangsmaterials in den Aufnahmebereich das Förderelement in Abhängigkeit von dem Erfassen des Teilbereichs relativ zu dem ersten Bauteil bewegt wird. Vorteile und vorteilhafte Ausgestaltungen des ersten Aspekts und des zweiten Aspekts der Erfindung sind als Vorteile und vorteilhafte Ausgestaltungen des dritten Aspekts der Erfindung anzusehen und umgekehrt.

Schließlich betrifft ein vierter Aspekt der Erfindung eine auch als Vorrichtung bezeichnete Anlage zur additiven Fertigung von Bauelementen, wobei die Anlage zum Durchführen eines Verfahrens gemäß dem ersten Aspekt der Erfindung und/oder gemäß dem zweiten Aspekt der Erfindung und/oder gemäß dem dritten Aspekt der Erfindung ausgebildet ist. Somit ist die Anlage zur additiven Fertigung des zweiten Bauteils ausgebildet. Ferner ist die Anlage dazu ausgebildet, das pulverförmige Ausgangsmaterial auf die beschriebene Weise in den Aufnahmebereich einzubringen und dabei beispielsweise in dem Aufnahmebereich vorteilhaft zu verteilen. Vorteile und vorteilhafte Ausgestaltungen des ersten Aspekts, des zweiten Aspekts und des dritten Aspekts der Erfindung sind als Vorteile und vorteilhafte Ausgestaltungen des vierten Aspekts der Erfindung anzusehen und umgekehrt.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: ausschnittsweise eine schematische Ansicht einer Anlage zur additiven Fertigung von Bauelementen, wobei die Anlage zum Durchführen eines erfindungsgemäßen Verfahrens ausgebildet ist;
- FIG 2: ausschnittsweise eine schematische Perspektivansicht einer Anlage zur additiven Fertigung von Bauelementen, wobei die Anlage zum Durchführen eines erfindungsgemäßen Verfahrens ausgebildet ist; und
- FIG 3: eine schematische Perspektivansicht einer Baueinheit, welche ein durch ein von einem generativen Fertigungsverfahren unterschiedliches, herkömmliches Herstellungsverfahren hergestelltes erstes Bauteil und ein additiv gefertigtes zweites Bauteil umfasst, welches mit dem ersten Bauteil verbunden ist.

In den Figuren sind gleiche oder funktionsgleiche Elemente mit gleichen Bezugszeichen versehen.

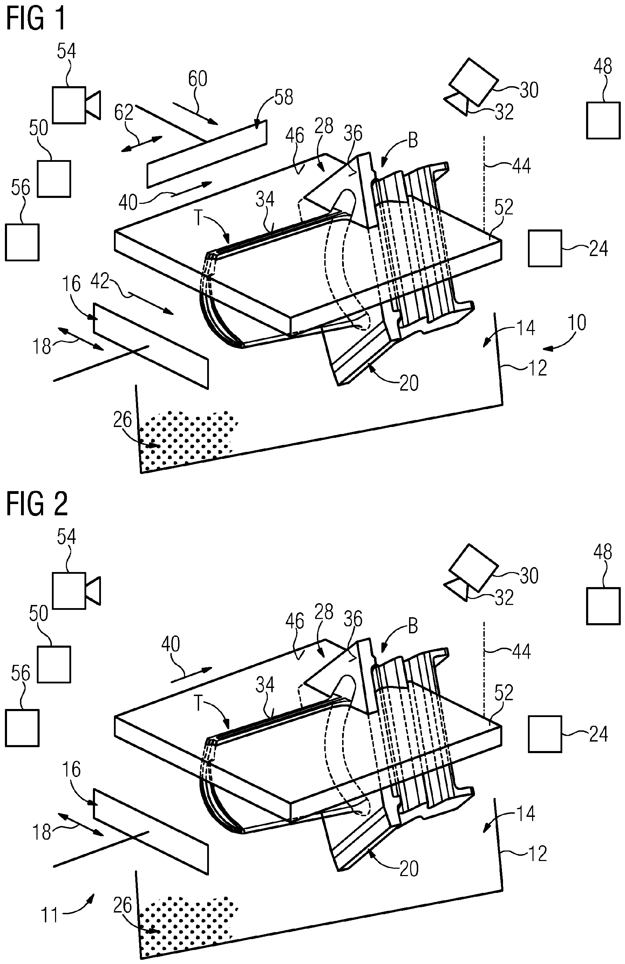

FIG 1 zeigt ausschnittsweise in einer schematischen Perspektivansicht eine auch als Vorrichtung bezeichnete Anlage 10 zur additiven Fertigung von Bauelementen. Dies bedeutet, dass die Anlage 10 zum Durchführen wenigstens eines generativen Fertigungsverfahrens ausgebildet ist. Das generative Fertigungsverfahren wird auch als additives Fertigungsverfahren oder additive Fertigung bezeichnet und ist beispielsweise selektives Laserschmelzen. Die Anlage 10 weist ein Behältnis 12 auf, welches einen auch als Aufnahmeraum bezeichneten Aufnahmebereich 14 begrenzt. Außerdem umfasst die Anlage 10 wenigstens ein auch als erstes Förderelement bezeichnetes Förderelement 16, welches vorliegend als Schieber beziehungsweise Rakel ausgebildet ist. Aus FIG 1 ist erkennbar, dass das Förderelement 16 eine erste Längserstreckungsrichtung aufweist, welche in FIG 1 durch einen Doppelpfeil 18 veranschaulicht ist. Die erste Längserstreckungsrichtung wird auch als erste Längsausdehnung bezeichnet.

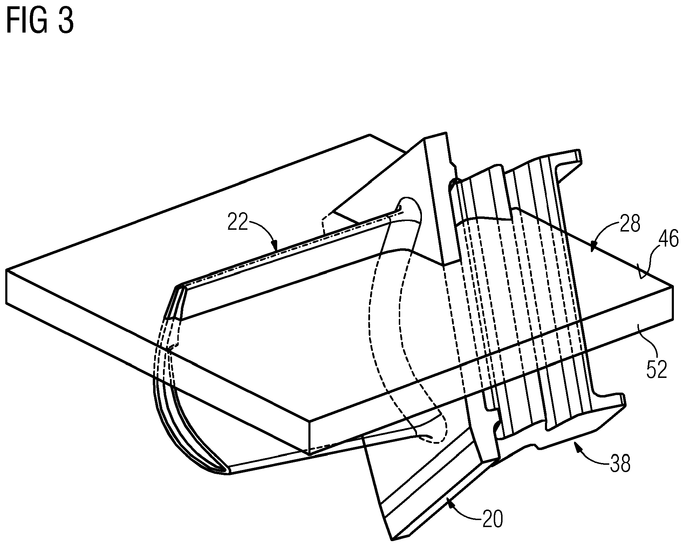

Im Folgenden wird anhand von FIG 1 ein Verfahren beschrieben, bei welchem ein bereits hergestelltes erstes Bauteil 20 mit wenigstens oder genau einem additiv gefertigten zweiten Bauteil 22 (FIG 3) versehen wird. Dies bedeutet, dass das Bauteil 22 bei dem Verfahren mittels der Anlage 10 additiv gefertigt beziehungsweise hergestellt und durch das additive Herstellen des Bauteils 22 mit dem Bauteil 20 verbunden wird. Mit anderen Worten wird bei dem Verfahren mittels der Anlage 10 das zuvor genannte generative Fertigungsverfahren durchgeführt, mittels welchem das Bauteil 22 hergestellt und mit dem Bauteil 20 verbunden wird. Das Bauteil 20 ist dabei ein herkömmlich hergestelltes Bauteil 20. Mit anderen Worten wird oder ist das Bauteil 22 durch ein von einem generativen Fertigungsverfahren unterschiedliches, herkömmliches Fertigungsverfahren hergestellt.

Bei einem ersten Schritt des Verfahrens wird das Bauteil 20 in einem Zustand, in welchem es noch nicht mit dem Bauteil 22 verbunden ist, bereitgestellt und zumindest teilweise in dem Aufnahmebereich 14 und somit in dem Behältnis 12 angeordnet. Dabei wird beispielsweise das Bauteil 20 mittels einer in FIG 1 besonders schematisch dargestellten und beispielsweise mechanischen Fixiereinrichtung 24 der Anlage 10 relativ zu dem Behältnis 12 fixiert, während das Bauteil 20 zumindest teilweise in dem Aufnahmebereich 14 angeordnet ist.

Bei einem sich beispielsweise zeitlich an den ersten Schritt anschließenden zweiten Schritt des Verfahrens wird ein in FIG 1 besonders schematisch dargestelltes, pulverförmiges Ausgangsmaterial 26 mittels des Förderelements 16 in den Aufnahmebereich 14 und somit in das Behältnis 12 eingebracht. Hierunter ist beispielsweise zu verstehen, dass das zunächst in einem Reservoir aufgenommene, pulverförmige Ausgangsmaterial 26 mittels des Förderelements 16 aus dem Reservoir in den Aufnahmebereich 14 hineingefördert wird. Alternativ oder zusätzlich kann unter dem Einbringen des pulverförmigen Ausgangsmaterials 26 in den Aufnahmebereich 14 verstanden werden, dass das pulverförmige Ausgangsmaterial 26 mittels des Förderelements 16 innerhalb des Aufnahmebereichs 14, insbesondere zumindest im Wesentlichen gleichmäßig, verteilt wird, sodass beispielsweise zumindest ein Teil des pulverförmigen Ausgangsmaterials 26 mittels des Förderelements 16 aus einem ersten Teil des Aufnahmebereichs 14 in einen sich beispielsweise an den ersten Teil anschließenden zweiten Teil des Aufnahmebereichs 14 bewegt, das heißt gefördert wird.

Somit ist unter dem mittels des Förderelements 16 bewirkbaren beziehungsweise bewirkten Einbringen des pulverförmigen Ausgangsmaterials 26 in den Aufnahmebereich 14 insbesondere zu verstehen, dass durch relativ zu dem Bauteil 20 erfolgendes Bewegen des Förderelements 16 das Ausgangsmaterial 26 bewegt und dabei in den Aufnahmebereich 14 hineinbewegt beziehungsweise hineingefördert und/oder innerhalb des Aufnahmebereichs 14 verteilt wird. Wieder mit anderen Worten ausgedrückt geht eine Bewegung beziehungsweise eine Förderung des Ausgangsmaterials 26 mit einer relativ zu dem Bauteil 20 und somit relativ zu dem Behältnis 12 erfolgenden Bewegung des Förderelements 16 bei dem Einbringen des Ausgangsmaterials 26 in den Aufnahmebereich 14, insbesondere gleichzeitig beziehungsweise zeitgleich, einher.

Das pulverförmige Ausgangsmaterial 26 wird auch als Ausgangsmaterial oder Pulver oder granulare Materie bezeichnet. Das pulverförmige Ausgangsmaterial 26 umfasst beispielsweise eine Vielzahl von insbesondere eigensteifen Partikeln, welche zunächst noch voneinander lose, das heißt nicht miteinander verbunden, sind.

Durch das Einbringen des Pulvers in den Aufnahmebereich 14 wird in dem Aufnahmebereich 14 und somit in dem Behältnis 12 aus dem Pulver ein in FIG 1 besonders schematisch dargestelltes Pulverbett 28 gebildet. Das Pulverbett 28 wird somit gebildet, während das Bauteil 20 bereits zumindest teilweise in dem Aufnahmebereich 14 angeordnet ist. Aus FIG 1 ist besonders gut erkennbar, dass das Pulver beziehungsweise das Pulverbett 28 zumindest teilweise um das Bauteil 20 herum angeordnet wird. Wie im Folgenden noch genauer erläutert wird, wird das Bauteil 22 durch das generative Fertigungsverfahren aus zumindest einem Teil des Pulverbetts 28 und somit aus zumindest einem Teil des Ausgangsmaterials 26 schichtweise, das heißt Schicht für Schicht, hergestellt.

Bei einem sich vorzugsweise zeitlich an den zweiten Schritt anschließenden dritten Schritt des Verfahrens wird mittels einer Strahlenquelle 30 der Anlage 10 wenigstens oder genau ein Energiestrahl 32 bereitgestellt, welcher vorzugsweise ein Laserstrahl ist. Somit ist die Strahlenquelle 30 beispielsweise ein Laser. Bei dem dritten Schritt des Verfahrens wird zumindest ein Teil T des Pulverbetts 28 mit dem Energiestrahl 32 bestrahlt und somit beaufschlagt. Der Teil T des Pulverbetts 28 ist zumindest durch einen Teil des Ausgangsmaterials 26 und somit zumindest durch einen Teil der Partikel des Ausgangsmaterials 26, welches in dem Aufnahmebereich 14 angeordnet ist, gebildet. Durch Beaufschlagen zumindest des Teils T mit dem Energiestrahl 32 wird der Teil T beziehungsweise werden die den Teil T bildenden Partikel des Ausgangsmaterials 26 erwärmt. Hierdurch werden die den Teil T bildenden Partikel des Ausgangsmaterials 26 miteinander verbunden, wodurch aus dem Teil T beziehungsweise aus den den Teil T bildenden Partikeln des Pulvers wenigstens oder genau eine Schicht zum schichtweisen Herstellen des zweiten Bauteils 22 hergestellt und zumindest mittelbar, insbesondere direkt, mit dem ersten Bauteil 20 verbunden wird.

Aus einer Zusammenschau von FIG 1 und 3 ist erkennbar, dass das Bauteil 20 beispielsweise eine erste Kontaktfläche 34 und eine zweite Kontaktfläche 36 aufweist. Die erste Kontaktfläche 34 verläuft beispielsweise in einer ersten Ebene, während die zweite Kontaktfläche 36 in einer zweiten Ebene verläuft. Die erste Ebene und die zweite Ebene verlaufen beispielsweise schräg oder senkrecht zueinander. Dabei wird das Bauteil 22 durch dessen generative Fertigung direkt mit den Kontaktflächen 34 und 36 verbunden. Mit anderen Worten wird das Bauteil 22 direkt an die Kontaktflächen 34 und 36 und somit an das Bauteil 20 angebunden und dadurch mit dem Bauteil 20 verbunden. Somit wird beispielsweise die zuvor genannte Schicht beziehungsweise werden die Partikel, aus denen die Schicht hergestellt wird, mit der Kontaktfläche 34 und/oder mit der Kontaktfläche 36, insbesondere direkt, verbunden, insbesondere durch das generative Fertigungsverfahren. Beispielsweise werden der zweite Schritt und der dritte Schritt aufeinanderfolgend und abwechselnd durchgeführt, sodass auf die beschriebene Weise nach dem Herstellen der zuvor genannten Schicht eine zweite Schicht, insbesondere auf der ersten Schicht, hergestellt wird. Die zweite Schicht wird dabei, insbesondere direkt, mit der ersten Schicht verbunden, sodass die zweite Schicht über die erste Schicht mit dem Bauteil 20 verbunden wird. Insbesondere wird die zweite Schicht über die erste Schicht mit der Kontaktfläche 34 verbunden. Alternativ oder zusätzlich wird die zweite Schicht beispielsweise direkt mit der Kontaktfläche 36 verbunden. Auf diese Weise wird das Bauteil 22 schichtweise, das heißt Schicht für Schicht und somit generativ, hergestellt und durch das generative Herstellen beziehungsweise während des generativen Herstellens mit dem Bauteil 20 verbunden. Hierdurch wird eine Baueinheit 38 hergestellt, welche die miteinander verbundenen Bauteile 20 und 22 umfasst.

Um nun das Bauteil 20 auf besonders vorteilhafte und präzise Weise mit dem Bauteil 22 versehen zu können, wird beispielsweise zum Einbringen des pulverförmigen Ausgangsmaterials 26 in den Aufnahmebereich 14 beziehungsweise während des Einbringens des pulverförmigen Ausgangsmaterials 26 in den Aufnahmebereich 14 das Förderelement 16 in wenigstens eine in FIG 1 durch einen ersten Pfeil 40 veranschaulichte erste Richtung und in wenigstens eine von der ersten Richtung unterschiedliche und in FIG 1 durch einen Pfeil 42 veranschaulichte zweite Richtung relativ zu dem ersten Bauteil 20 und relativ zu dem Behältnis 12 bewegt. Anhand der Pfeile 40 und 42 ist aus FIG 1 erkennbar, dass bei dem in FIG 1 gezeigten Ausführungsbeispiel die Richtungen schräg oder aber vorliegend senkrecht zueinander verlaufen. Dabei fällt beispielsweise die zweite Richtung mit der Längserstreckungsrichtung des Förderelements 16 zusammen beziehungsweise die zweite Richtung verläuft parallel zur Längserstreckungsrichtung.

Insbesondere ist es beispielsweise vorgesehen, dass das Förderelement 16 jeweils zumindest translatorisch in die erste Richtung und in die zweite Richtung relativ zu dem ersten Bauteil 20 bewegt wird, während das Pulver mittels des Förderelements 16 in den Aufnahmebereich 14 eingebracht wird.

Beispielsweise ist es vorgesehen, dass das Förderelement 16 während des Einbringens des Ausgangsmaterials 26 in den Aufnahmebereich 14 zunächst in die erste Richtung zumindest translatorisch relativ zu dem Bauteil 20 bewegt wird. Daraufhin wird das Förderelement 16 während des Einbringens des Ausgangsmaterials 26 um eine senkrecht zur ersten Richtung und senkrecht zur zweiten Richtung verlaufende Schwenkachse 44 relativ zu dem Bauteil 20 und relativ zu dem Behältnis 12 verschwenkt. Daraufhin wird das Förderelement 16 während des Einbringens in die schräg oder senkrecht zur ersten Richtung verlaufende zweite Richtung zumindest translatorisch relativ zu dem ersten Bauteil 20 und relativ zu dem Behältnis 12 bewegt. Hierdurch kann das Pulver besonders definiert, bedarfsgerecht und zumindest im Wesentlichen gleichmäßig in dem Aufnahmebereich 14 angeordnet und um das Bauteil 20 herum verteilt werden. Außerdem kann dadurch das Pulverbett 28, insbesondere dessen Oberfläche 46, besonders vorteilhaft geglättet werden, wodurch das Bauteil 22 präzise hergestellt werden kann. Bei dem Bestrahlen zumindest des Teils T mit dem Energiestrahl 32 wird die Oberfläche 46 bestrahlt. Mit anderen Worten, die zuvor genannten, den Teil T bildenden Partikel des Pulvers bilden einen Teilbereich der Oberfläche 46, wobei dieser Teilbereich der Oberfläche 46 mit dem Energiestrahl 32 beaufschlagt wird, um die Partikel zu erwärmen und miteinander zu verbinden.

Beispielsweise werden die Partikel durch das Erwärmen geschmolzen, das heißt an- und/oder aufgeschmolzen und dadurch miteinander verbunden, wodurch die zuvor genannte Schicht hergestellt wird. Ferner ist es denkbar, dass die Partikel erwärmt und dadurch miteinander verbacken und somit miteinander verbunden werden, wobei jedoch durch das Beaufschlagen beziehungsweise Bestrahlen der Partikel mit dem Energiestrahl 32 ein Schmelzen der Partikel unterbleibt.

In FIG 1 ist besonders schematisch eine Antriebseinrichtung 48 gezeigt, mittels welcher beispielsweise der Energiestrahl 32 relativ zu dem Bauteil 20 und relativ zu dem Pulverbett 28, insbesondere entlang der Oberfläche 46, bewegt wird, während der Energiestrahl 32 auf das Pulverbett 28, insbesondere auf dessen Oberfläche 46, auftrifft. Dadurch kann das Pulver bedarfsgerecht erwärmt werden, sodass die jeweilige Schicht bedarfsgerecht hergestellt werden kann. Außerdem ist in FIG 1 besonders schematisch ein Antrieb 50 gezeigt, mittels welchem beispielsweise das Förderelement 16 während des Einbringens des Pulvers in den Aufnahmebereich 14 relativ zu dem Bauteil 20 bewegt wird. Somit wird beispielsweise das Förderelement 16 mittels des Antriebs 50 in die erste Richtung und/oder in die zweite Richtung bewegt und/oder um die Schwenkachse 44 relativ zu dem Bauteil 20 verschwenkt.

Aus FIG 1 ist erkennbar, dass sich das Pulverbett 28, insbesondere dessen Oberfläche 46, in einer Ebene 52 erstreckt. Die Ebene 52 verläuft beispielsweise zumindest im Wesentlichen horizontal. Mit anderen Worten wird das Pulverbett 28, insbesondere die Oberfläche 46, durch das Einbringen des pulverförmigen Ausgangsmaterials 26 in den Aufnahmebereich 14 derart gebildet, dass sich das Pulverbett 28, insbesondere die Oberfläche 46, nach dem Einbringen des Pulvers in den Aufnahmebereich 14 in die Ebene 52 erstreckt. Hierzu wird beispielsweise das Förderelement 16 entlang der Ebene 52 beziehungsweise in der Ebene 52 bewegt. Somit verlaufen beispielsweise die erste Richtung und die zweite Richtung in der Ebene 52 oder parallel zu der Ebene 52. Da die Schwenkachse 44 senkrecht zur ersten Richtung und senkrecht zur zweiten Richtung verläuft, verläuft die Schwenkachse 44 senkrecht zur Ebene 52 und somit senkrecht zur Oberfläche 46. Insbesondere kann dadurch das Pulver besonders vorteilhaft geglättet werden, sodass die Oberfläche 46 besonders glatt ausgestaltet werden kann.

Dabei weist das Bauteil 20 eine solch komplexe Geometrie, insbesondere Außengeometrie, auf, sodass zumindest ein Teilbereich B die Ebene 52 und somit die Oberfläche 46 überragt, während das pulverförmige Ausgangsmaterial 26 mittels des Förderelements 16 in den Aufnahmebereich 14 eingebracht wird. Dadurch, dass nun das Förderelement 16 in die erste Richtung und in die zweite Richtung bewegt wird, kann das Förderelement 16 um den Teilbereich B herumbewegt werden, und Kollisionen zwischen dem Förderelement 16 und dem Teilbereich B können sicher vermieden werden.

Die Anlage 10 umfasst dabei beispielsweise wenigstens eine elektrische oder elektronische Erfassungseinrichtung 54, welche beispielsweise als eine optische Erfassungseinrichtung ausgebildet sein kann. Beispielsweise umfasst die Erfassungseinrichtung 54 wenigstens einen optischen Sensor wie beispielsweise eine Kamera oder einen Lasersensor beziehungsweise Laserscanner. Bei dem Verfahren wird nun zumindest der Teilbereich B mittels der Erfassungseinrichtung 54 erfasst. Die Erfassungseinrichtung 54 stellt wenigstens ein elektrisches Signal bereit, welches den mittels der Erfassungseinrichtung 54 erfassten Teilbereich B charakterisiert. Dabei umfasst die Anlage 10 eine elektronische Recheneinrichtung 56, welche das von der Erfassungseinrichtung 54 bereitgestellte Signal empfängt. In Abhängigkeit von dem empfangenen ersten Signal stellt die Recheneinrichtung 56 ein auch als Ansteuersignal bezeichnetes, elektrisches zweites Signal bereit. Der Antrieb 50 empfängt das Ansteuersignal, wodurch der Antrieb 50 mittels der Recheneinrichtung 56 angesteuert und somit betrieben, insbesondere geregelt oder gesteuert, wird. In der Folge wird das Förderelement 16 mittels des Antriebs 50 in Abhängigkeit von dem Ansteuersignal und somit in Abhängigkeit von dem Erfassen des Teilbereichs B in die erste Richtung und in die zweite Richtung relativ zu dem Bauteil 20 bewegt. Hierdurch können unerwünschte Kollisionen des Förderelements 16 mit dem Bauteil 20, insbesondere mit dem Teilbereich B, sicher vermieden werden.

Bei dem in FIG 1 gezeigten Ausführungsbeispiel umfasst die Anlage 10 ein zusätzliches, zweites Förderelement 58, welches beispielsweise als Schieber oder Rakel ausgebildet sein kann. Das Förderelement 16 wird beispielsweise als Hauptschieber oder Hauptrakel bezeichnet, wobei das Förderelement 58 beispielsweise als Nebenschieber oder Nebenrakel bezeichnet wird.

Bei dem Verfahren kann vorgesehen sein, dass das Pulver auch mittels des zusätzlichen zweiten Förderelements 58 in den Aufnahmebereich 14 eingebracht wird, wobei die vorigen und folgenden Ausführungen zu dem Förderelement 16 ohne Weiteres auch auf das Förderelement 58 übertragen werden können und umgekehrt. Um das Pulver auch mittels des Förderelements 58 in den Aufnahmebereich 14 einzubringen, wird das zweite Förderelement 58 mittels des Antriebs 50 relativ zu dem ersten Förderelement 16 und relativ zu dem ersten Bauteil 20 und somit relativ zu dem Behältnis 12, insbesondere zumindest translatorisch, bewegt. Dabei ist es vorzugsweise vorgesehen, dass auch das zweite Förderelement 58 in Abhängigkeit von dem Erfassen des Teilbereichs B bewegt wird.

Beispielsweise wird das zweite Förderelement 58 während des Einbringens des Pulvers in die erste Richtung und/oder in die zweite Richtung oder in eine in FIG 1 durch einen Pfeil 60 veranschaulichte dritte Richtung relativ zu dem ersten Bauteil 20 und relativ zu dem Förderelement 16, insbesondere zumindest translatorisch, bewegt. Die dritte Richtung kann eine von der ersten Richtung und von der zweiten Richtung unterschiedliche dritte Richtung sein und somit beispielsweise schräg oder senkrecht zur ersten Richtung und/oder senkrecht zur zweiten Richtung verlaufen. Bei dem in FIG 1 gezeigten Ausführungsbeispiel jedoch verläuft die dritte Richtung parallel zur zweiten Richtung beziehungsweise die dritte Richtung fällt mit der zweiten Richtung zusammen.

Auch das Förderelement 58 weist eine Längserstreckungsrichtung auf, welche in FIG 1 durch einen Doppelpfeil 62 veranschaulicht ist. Beispielsweise verläuft die erste Richtung senkrecht zur Längserstreckungsrichtung des Förderelements 16. Die erste Richtung kann parallel zur Längserstreckungsrichtung des Förderelements 58 verlaufen oder mit der Längserstreckungsrichtung des Förderelements 58 zusammenfallen. Alternativ oder zusätzlich verläuft die dritte Richtung senkrecht oder schräg zur Längserstreckungsrichtung des Förderelements 58. Alternativ oder zusätzlich verläuft die dritte Richtung schräg oder senkrecht zur ersten Richtung.

Ferner ist es denkbar, dass das Förderelement 16 beziehungsweise 58 senkrecht zu seiner jeweiligen Längserstreckungsrichtung bewegt wird, wenn das Förderelement 16 beziehungsweise 58 in die erste Richtung und/oder in die zweite Richtung und/oder in die dritte Richtung bewegt wird. Alternativ oder zusätzlich ist es denkbar, dass das jeweilige Förderelement 16 beziehungsweise 58 in seine beziehungsweise entlang seiner Längserstreckungsrichtung relativ zu dem Bauteil 20 bewegt wird, insbesondere wenn das Förderelement 16 beziehungsweise 58 in die erste Richtung und/oder in die zweite Richtung und/oder in die dritte Richtung bewegt wird. Hierdurch können Kollisionen zwischen dem Bauteil 20 und dem jeweiligen Förderelement 16 beziehungsweise 58 sicher vermieden werden.

FIG 2 zeigt eine auch als Vorrichtung bezeichnete Anlage 11, wobei die vorigen und folgenden Ausführungen zur Anlage 10 ohne Weiteres auch auf die Anlage 11 übertragen werden können und umgekehrt. Die Anlage 11 umfasst das Förderelement 16, mittels welchem das Pulver in den Aufnahmebereich 14 eingebracht wird. Bei dem zweiten Ausführungsbeispiel ist es vorgesehen, dass zumindest der Teilbereich B des Bauteils 20 mittels der Erfassungseinrichtung 54 erfasst wird, wobei das Förderelement 16 zum Einbringen des Pulvers in den Aufnahmebereich 14 beziehungsweise während des Einbringens des Pulvers in den Aufnahmebereich 14 in Abhängigkeit von dem Erfassen des Teilbereichs B mittels des Antriebs 50 relativ zu dem Bauteil 20 bewegt wird. Bei dem in FIG 2 veranschaulichten Ausführungsbeispiel umfasst die Anlage 11 kein zusätzlich zu dem Förderelement 16 vorgesehenes weiteres Förderelement zum Einbringen des Pulvers in den Aufnahmebereich 14. Ferner ist es alternativ oder zusätzlich bei dem in FIG 2 veranschaulichten Ausführungsbeispiel denkbar, dass das Förderelement 16 zum Einbringen des Pulvers in den Aufnahmebereich 14 beziehungsweise während des Einbringens des Pulvers in den Aufnahmebereich 14 lediglich in die erste Richtung beziehungsweise in genau eine Richtung relativ zu dem Bauteil 20, insbesondere zumindest translatorisch, bewegt wird.

Da die Baueinheit 38 aus dem konventionell hergestellten Bauteil 20 und dem additiv gefertigten Bauteil 22 hergestellt beziehungsweise aufgebaut wird, ist eine Hybridfertigung vorgesehen, mittels welcher die Baueinheit 38 hergestellt wird. Bei einer solchen Hybridfertigung können konventionell hergestellte Bauteile mit additiv gefertigten Bauteilen kombiniert werden, um beispielsweise wenigstens einen oder mehrere Teilbereiche des Bauteils 20 durch additive Fertigung und somit additiv herzustellen beziehungsweise zu reparieren. Hierbei liegt der Nutzen insbesondere in einer Produktivitätssteigerung sowie der Möglichkeit, hochkomplexe Bauteilbereiche und somit komplexe Geometrien mittels eines generativen Fertigungsverfahrens herstellen zu können.

Herkömmlicherweise liegt bei einer solchen Hybridfertigung ein Problem oder Nachteil in einer beschränkten Anwendbarkeit von Bauteilen bezüglich einer Ausrichtungsmöglichkeit des konventionellen Bauteils 20 innerhalb der Anlage 10 beziehungsweise 11 und dabei insbesondere innerhalb des Behältnisses 12. Herkömmliche Anlagen, insbesondere herkömmliche Beschichtersysteme wie beispielsweise Pulverbett-Beschichtersysteme, arbeiten in einer horizontalen Ebene wie beispielsweise der Ebene 52. Aus dieser horizontalen Ebene herausragende, das heißt diese horizontale Ebene überragende Bereiche des konventionellen Bauteils kollidieren üblicherweise mit dem auch als Beschichter bezeichneten Förderelement 16 beziehungsweise 58, was nun jedoch bei der Anlage 10 beziehungsweise 11 beziehungsweise durch das Verfahren vermieden werden kann.

Mit anderen Worten, das jeweilige Förderelement 16 beziehungsweise 58 wird auch als Beschichter bezeichnet, da beispielsweise durch das Einbringen des Pulvers in den Aufnahmebereich 14 zumindest ein Teilbereich des bereits in dem Aufnahmebereich 14 angeordneten Bauteils 20 mit dem Pulver beschichtet wird. Vorliegend ist es beispielsweise möglich, den aus der auch als Arbeitsebene bezeichneten Ebene herausragenden Teilbereich B des Bauteils 20 zu detektieren, das heißt mittels der Erfassungseinrichtung 54 zu erfassen. In der Folge kann das Förderelement 16 beziehungsweise 58 in Abhängigkeit von dem Erfassen des Teilbereichs B derart bewegt werden, dass das Förderelement 16 beziehungsweise 58 zwar besonders nahe an den Teilbereich B heranbewegt, insbesondere herangefahren, wird, jedoch eine Kollision des Förderelements 16 beziehungsweise 58 mit dem Teilbereich B vermieden wird. Insbesondere kann dadurch ein variabler und automatisierter Verfahrweg des jeweiligen, auch als Beschichter bezeichneten Förderelements 16 beziehungsweise 58 geschaffen werden. In der Folge kann eine besonders flexible Nutzung und ein breites Anwendungsfeld des generativen Fertigungsverfahrens und somit der Anlage 10 beziehungsweise 11 geschaffen werden, um die zuvor genannte Hybridfertigung zu realisieren. Schnittstellenbereiche wie beispielsweise die Kontaktflächen 34 und 36 können funktionsgerecht gelegt werden und sind nicht durch Verfahrensrestriktionen bestimmt. Zudem könnte durch das Verfahren beziehungsweise durch die Anlage 10 beziehungsweise 11 ein modulares Beschichterkonzept dargestellt werden, wobei hierfür eine entsprechende Steuerungssoftware geschaffen werden kann.

Bei den in den FIG gezeigten Ausführungsbeispielen ist das Bauteil 22 beispielsweise eine Kante, insbesondere eine Hinterkante, welche beispielsweise auf dem konventionellen Bauteil 20 hergestellt, insbesondere auf das konventionelle Bauteil 20 aufgedruckt, wird. Dabei ist beispielsweise das Bauteil 20 ein Schaufelfuß einer Leit- oder Laufradschaufel, wobei beispielsweise die Baueinheit 38 die zuvor genannten Leit- oder Laufradschaufel ist. Das jeweilige Förderelement 16 beziehungsweise 58 kann, insbesondere hinsichtlich seines Verfahrwegs, derart, insbesondere gesteuert oder geregelt, bewegt werden, dass das Förderelement 16 beziehungsweise 58 besonders nahe an die jeweilige Kontaktfläche 34 beziehungsweise 36 heranbewegt wird, jedoch nicht mit dem Bauteil 20 kollidiert. Um dabei unerwünschte Bewegungen des Bauteils 20 zu vermeiden, wird das Bauteil 20 mittels der Fixiereinrichtung 24 relativ zu dem Behältnis 12 fixiert, beispielsweise durch Spannen beziehungsweise Einspannen, sodass das Bauteil 20 beispielsweise mittels der Fixiereinrichtung 24 eingespannt oder verspannt ist. Hierdurch kann ein besonders gleichmäßiger Pulverauftrag realisiert werden, wobei ein etwaiges beziehungsweise mögliches Absacken des Pulvers zu berücksichtigen ist. Insbesondere kann die Oberfläche 46 vorteilhaft geglättet werden.

### Bezugszeichenliste

- 10: Anlage
- 11: Anlage
- 12: Behältnis
- 14: Aufnahmebereich
- 16: Förderelement
- 18: Doppelpfeil
- 20: erstes Bauteil
- 22: zweites Bauteil
- 24: Fixiereinrichtung
- 26: pulverförmiges Ausgangsmaterial
- 28: Pulverbett
- 30: Strahlenquelle
- 32: Energiestrahl
- 34: Kontaktfläche
- 36: Kontaktfläche
- 38: Baueinheit
- 40: Pfeil
- 42: Pfeil
- 44: Schwenkachse
- 46: Oberfläche
- 48: Antriebseinrichtung
- 50: Antrieb
- 52: Ebene
- 54: Erfassungseinrichtung
- 56: elektronische Recheneinrichtung
- 58: zweites Förderelement
- 60: Pfeil
- 62: Doppelpfeil
- B: Teilbereich
- T: Teil

## Patentansprüche

1. Verfahren zum Versehen eines bereits hergestellten ersten Bauteils (20) mit wenigstens einem additiv gefertigten zweiten Bauteil (22),
mit den Schritten:
- Einbringen eines pulverförmigen Ausgangsmaterials (26) in einen Aufnahmebereich (14), in welchem das bereits hergestellte erste Bauteil (20) zumindest teilweise bereits angeordnet ist, mittels wenigstens eines Förderelements (16), wodurch in dem Aufnahmebereich (14) ein Pulverbett (28) aus dem Ausgangsmaterial (26) gebildet wird; und
- Bestrahlen zumindest eines Teils (T) des Pulverbetts (28) mit wenigstens einem Energiestrahl (32), wodurch zumindest der Teil (T) erwärmt und zumindest aus dem Teil (T) wenigstens eine Schicht zum schichtweisen Herstellen des zweiten Bauteils (22) hergestellt und mit dem ersten Bauteil (20) verbunden wird;
**dadurch gekennzeichnet, dass**
zum Einbringen des pulverförmigen Ausgangsmaterials (26) in den Aufnahmebereich (14) das Förderelement (16) in wenigstens eine erste Richtung (40) und in wenigstens eine von der ersten Richtung (40) unterschiedliche zweite Richtung (42) relativ zu dem ersten Bauteil (20) bewegt wird.

2. Verfahren nach Anspruch 1,
wobei das Förderelement jeweils zumindest translatorisch in die jeweilige Richtung (40, 42) relativ zu dem ersten Bauteil (20) bewegt wird.

3. Verfahren nach Anspruch 2,
wobei das Förderelement (16) während des Einbringens des Ausgangsmaterials (26) zunächst in die erste Richtung (40) zumindest translatorisch relativ zu dem ersten Bauteil (20) bewegt, daraufhin um eine senkrecht zu den Richtungen (40, 42) verlaufende Schwenkachse (44) relativ zu dem ersten Bauteil (20) verschwenkt und daraufhin in die, insbesondere schräg oder senkrecht zur ersten Richtung (40, 42) verlaufende, zweite Richtung (42) zumindest translatorisch relativ zu dem ersten Bauteil (20) bewegt wird.

4. Verfahren nach einem der vorhergehenden Ansprüche,
wobei sich das Pulverbett (28) in einer Ebene (52) erstreckt, und wobei die Richtungen (40, 42) in oder parallel zu der Ebene (52) verlaufen.

5. Verfahren nach einem der vorhergehenden Ansprüche,
wobei zumindest ein Teilbereich (B) des in dem Aufnahmebereich (14) angeordneten ersten Bauteils (20) mittels einer Erfassungseinrichtung (54) erfasst wird, wobei das Förderelement (16) in Abhängigkeit von dem Erfassen des Teilbereiches (B) bewegt wird.

6. Verfahren nach einem der vorhergehenden Ansprüche,
wobei das pulverförmige Ausgangsmaterial (26) auch mittels wenigstens eines zusätzlichen zweiten Förderelements (58) in den Aufnahmebereich (14) eingebracht wird, indem das zweite Förderelement (58) relativ zu dem ersten Förderelement (16) und relativ zu dem ersten Bauteil (20) bewegt wird.

7. Verfahren nach den Ansprüchen 5 und 6,
wobei das zweite Förderelement (58) in Abhängigkeit von dem Erfassen des Teilbereiches (B) bewegt wird.

8. Verfahren nach einem der Ansprüche 5 bis 7,
wobei das zweite Förderelement (58) in zumindest eine der Richtungen (40, 42) und/oder in eine von der ersten Richtung (40) und von der zweiten Richtung (42) unterschiedliche dritte Richtung (60) relativ zu dem ersten Bauteil (20) und relativ zu dem ersten Förderelement (16) bewegt wird.

9. Verfahren zum Versehen eines bereits hergestellten ersten Bauteils (20) mit wenigstens einem additiv gefertigten zweiten Bauteil (22),
mit den Schritten:
- Einbringen eines pulverförmigen Ausgangsmaterials (26) in einen Aufnahmebereich (14), in welchem das bereits hergestellte erste Bauteil (20) bereits angeordnet ist, wodurch in dem Aufnahmebereich (14) ein Pulverbett (28) aus dem Ausgangsmaterial (26) gebildet wird; und
- Bestrahlen zumindest eines Teils (T) des Pulverbetts (28) mit wenigstens einem Energiestrahl (32), wodurch zumindest der Teil (T) erwärmt und zumindest aus dem Teil (T) wenigstens eine Schicht zum schichtweisen Herstellen des zweiten Bauteils (22) hergestellt und mit dem ersten Bauteil (20) verbunden wird;
**dadurch gekennzeichnet, dass**
zum Einbringen des pulverförmigen Ausgangsmaterials (26) in den Aufnahmebereich (14) ein erstes Förderelement (16) und wenigstens ein zusätzliches zweites Förderelement (58) relativ zu dem ersten Bauteil (20) und relativ zueinander bewegt werden.

10. Verfahren zum Versehen eines bereits hergestellten ersten Bauteils (20) mit wenigstens einem additiv gefertigten zweiten Bauteil (22),
mit den Schritten:
- Einbringen eines pulverförmigen Ausgangsmaterials (26) in einen Aufnahmebereich (14), in welchem das bereits hergestellte erste Bauteil (20) bereits angeordnet ist, mittels wenigstens eines Förderelements (16), wodurch in dem Aufnahmebereich (14) ein Pulverbett (28) aus dem Ausgangsmaterial (26) gebildet wird; und
- Bestrahlen zumindest eines Teils (T) des Pulverbetts (28) mit wenigstens einem Energiestrahl (32), wodurch zumindest der Teil (T) erwärmt und zumindest aus dem Teil (T) wenigstens eine Schicht zum schichtweisen Herstellen des zweiten Bauteils (22) hergestellt und mit dem ersten Bauteil (20) verbunden wird;
**dadurch gekennzeichnet, dass**
zumindest ein Teilbereich (B) des in dem Aufnahmebereich (14) angeordneten ersten Bauteils (20) mittels einer Erfassungseinrichtung (54) erfasst wird, wobei zum Einbringen des pulverförmigen Ausgangsmaterials (26) das Förderelement (16) in Abhängigkeit von dem Erfassen des Teilbereiches (B) relativ zu dem ersten Bauteil (20) bewegt wird.

11. Anlage (10, 11) zur additiven Fertigung von Bauelementen,
wobei die Anlage (10, 11) zum Durchführen eines Verfahrens nach einem der vorhergehenden Ansprüche ausgebildet ist.
